# EUROPEAN PATENT APPLICATION

(11) **EP 4 583 225 A1**
(43) Date of publication of application: **09.07.2025**
(21) Application number: 22966211.9
(22) Date of filing: 25.11.2022
(51) Int. Cl.: H01M 10/0525

(54) **SECONDARY BATTERY AND ELECTRIC DEVICE**

(71) Applicant: Contemporary Amperex Technology (Hong Kong) Limited, Central (HK)
(72) Inventor: CHAI, Zhisheng, Ningde, Fujian 352100 (CN); JIN, Haizu, Ningde, Fujian 352100 (CN); LIU, Chao, Ningde, Fujian 352100 (CN)
(74) Representative: Ziebig Hengelhaupt Intellectual Property Attorneys Patentanwaltskanzlei PartGmbB
(86) International application number: PCT/CN2022/134218
(87) International publication number: WO 2024/108520

(57) **Abstract**

The present application relates to a secondary battery and a power consuming device comprising same. The secondary battery comprises a negative electrode plate and a separator, wherein the negative electrode plate comprises a negative electrode current collector and a negative electrode film layer provided on at least one side of the negative electrode current collector; and with the capacity per unit area of the negative electrode film layer being denoted as C, and the pore volume per unit area of the separator being denoted as V, the secondary battery satisfies: 0.05 cm³/Ah ≤ V/C ≤ 0.3 cm³/Ah, where C is in mAh, and V is in cm³. The secondary battery has a good cycling performance.

## Description

### Technical Field

The present application relates to the technical field of lithium batteries, and in particular to a secondary battery and a power consuming device.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. Due to the great development of secondary batteries, higher requirements have also been placed on the secondary batteries in terms of energy density, cycling performance, etc. How to further improve the service performance of batteries is still the direction of continuous efforts by those skilled in the art.

### Summary of the Invention

The present application has been made in view of the above problems, and an object thereof is to provide a secondary battery which has a good cycling performance.

In order to achieve the above object, a first aspect of the present application provides a secondary battery comprising a negative electrode plate and a separator, wherein the negative electrode plate comprises a negative electrode current collector and a negative electrode film layer provided on at least one side of the negative electrode current collector;
with the capacity per unit area of the negative electrode film layer being denoted as C, and the pore volume per unit area of the separator being denoted as V, the secondary battery satisfies: 0.05 cm³/Ah ≤ V/C ≤ 0.3 cm³/Ah, where C is in mAh, and V is in cm³.

For the secondary battery of the present application, by ensuring that the ratio of the pore volume of the separator to the capacity per unit area of the negative electrode film layer satisfies the above range, the infiltration capability of the separator and the capacity of the negative electrode are ensured, which enables the corresponding battery to have a good cycling performance.

In any embodiment, 0.07 cm³/Ah ≤ V/C ≤ 0.25 cm³/Ah; and optionally, 0.08 cm³/Ah ≤ V/C ≤ 0.2 cm³/Ah. Thus, the infiltration capability of the separator and the capacity of the negative electrode can be further ensured, which enables the corresponding battery to have a good cycling performance.

In any embodiment, C is 2-8 mAh, optionally 2.3-5.5 mAh, further optionally 2.3-5.0 mAh. Thus, the infiltration capability of the separator and the capacity of the negative electrode can be further ensured, which enables the corresponding battery to have a good cycling performance.

In any embodiment, V is 2 × 10⁻⁴ - 20 × 10⁻⁴ cm³, optionally 2 × 10⁻⁴ - 15 × 10⁻⁴ cm³, further optionally 4 × 10⁻⁴ - 10 × 10⁻⁴ cm³. Thus, the infiltration capability of the separator and the capacity of the negative electrode can be further ensured, which enables the corresponding battery to have a good cycling performance.

In any embodiment, the negative electrode film layer has a surface density of 0.002 g/cm² - 0.02 g/cm², optionally 0.006-0.015 g/cm², further optionally 0.005-0.007 g/cm². Thus, the infiltration capability of the separator and the capacity of the negative electrode can be further ensured, which enables the corresponding battery to have a good cycling performance.

In any embodiment, the negative electrode film layer has a thickness of 0.03-0.24 mm; optionally 0.08-0.16 mm. Thus, the infiltration capability of the separator and the capacity of the negative electrode can be further ensured, which enables the corresponding battery to have a good cycling performance.

In any embodiment, the separator comprises a base film and a coating layer provided on at least one side of the base film, wherein the coating layer comprises a first polymer particle and a second polymer particle. Thus, the infiltration capability of the separator and the capacity of the negative electrode can be further ensured, which enables the corresponding battery to have a good cycling performance.

In any embodiment, the number-average particle size of the first polymer particle is greater than that of the second polymer particle. Thus, the infiltration capability of the separator and the capacity of the negative electrode can be further ensured, which enables the corresponding battery to have a good cycling performance.

In any embodiment, the number-average particle size of the first polymer particle is 2-8 µm, optionally 3-7 µm; and/or, the number-average particle size of the second polymer particle is 50-800 nm, optionally 100-600 nm. Thus, the infiltration capability of the separator and the capacity of the negative electrode can be further ensured, which enables the corresponding battery to have a good cycling performance.

In any embodiment, the content of the first polymer particle is less than or equal to 15%, based on the weight of the coating layer; and/or, the content of the second polymer particle is less than or equal to 30%, based on the weight of the coating layer. Thus, the infiltration capability of the separator and the capacity of the negative electrode can be further ensured, which enables the corresponding battery to have a good cycling performance.

In any embodiment, the first polymer particle comprises at least one of a homopolymer or copolymer of a fluorine-containing olefine monomeric unit, a homopolymer or copolymer of an olefine monomeric unit, a homopolymer or copolymer of an unsaturated nitrile monomeric unit, a homopolymer or copolymer of an alkylene oxide monomeric unit, a homopolymer or copolymer of an acrylate monomeric unit, a homopolymer or copolymer of an imide monomeric unit, and modified compounds thereof; and/or, the second polymer particle comprises at least one of a homopolymer or copolymer of an unsaturated nitrile monomeric unit, a homopolymer or copolymer of a fluorine-containing olefine monomeric unit, a homopolymer or copolymer of a styrene-based monomeric unit, and modified compounds thereof. Thus, the infiltration capability of the separator and the capacity of the negative electrode can be further ensured, which enables the corresponding battery to have a good cycling performance.

In any embodiment, the coating layer further comprises an inorganic particle; and optionally, the inorganic particle has a volume-average particle size of 0.1-2 µm. Thus, the infiltration capability of the separator and the capacity of the negative electrode can be further ensured, which enables the corresponding battery to have a good cycling performance.

In any embodiment, the base film has a thickness of 5-16 µm; and/or, the coating layer has a thickness of 1-5 µm. Thus, the infiltration capability of the separator and the capacity of the negative electrode can be further ensured, which enables the corresponding battery to have a good cycling performance.

In any embodiment, the ratio of the thickness of the coating layer on one side to the thickness of the base film is 0.1-1.5. Thus, the infiltration capability of the separator and the capacity of the negative electrode can be further ensured, which enables the corresponding battery to have a good cycling performance.

In any embodiment, the separator has an air permeability of less than or equal to 370 s; optionally 100-250 s. Thus, the infiltration capability of the separator and the capacity of the negative electrode can be further ensured, which enables the corresponding battery to have a good cycling performance.

In any embodiment, the separator has a porosity of 20% - 60%. Thus, the infiltration capability of the separator and the capacity of the negative electrode can be further ensured, which enables the corresponding battery to have a good cycling performance.

A second aspect of the present application further provides a power consuming device, comprising a secondary battery of the first aspect of the present application.

For the secondary battery of the present application, by ensuring that the ratio of the pore volume of the separator to the capacity per unit area of the negative electrode film layer satisfies the above range, it is ensured that the separator has a sufficiently large pore volume and meanwhile the negative electrode film layer has a sufficient capacity per unit area, which enables the corresponding battery to have a good cycling performance.

### Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a power consuming device using a secondary battery according to an embodiment of the present application as a power source.

List of reference numerals:
5. secondary battery; 51. housing; 52. electrode assembly; 53. cover plate; 6. power consuming device.

### Detailed Description of Embodiments

Hereafter, embodiments of the secondary battery and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Currently, a separator is generally improved by coating a base film with a ceramic coating layer and/or an adhesive coating layer. For this separator, the ion channels between the separator and the electrode plate may be blocked due to the flattening of the adhesive coating layer as the pressure inside the battery increases, resulting in insufficient infiltration by the electrolyte solution, and even problems such as dark spots and lithium precipitation. Moreover, such improvements to a separator also do not consider the cooperation effect of the separator with the positive and negative electrodes. Therefore, despite the existing improvements to secondary batteries, in particular to separators, further improvements are desirable. The inventors have found through research that when the pore volume of the separator and the capacity per unit area of the negative electrode film layer in a secondary battery satisfy a specific relationship, not only the infiltration capability of the separator is ensured but also the capacity of the negative electrode is ensured, thereby enabling the corresponding secondary battery to have a good cycling performance.

### Secondary battery

In some embodiments, a first aspect of the present application provides a secondary battery comprising a negative electrode plate and a separator, wherein the negative electrode plate comprises a negative electrode current collector and a negative electrode film layer provided on at least one side of the negative electrode current collector;
with the capacity per unit area of the negative electrode film layer being denoted as C, and the pore volume per unit area of the separator being denoted as V, the secondary battery satisfies: 0.05 cm³/Ah ≤ V/C ≤ 0.3 cm³/Ah, where C is in mAh, and V is in cm³.

For the secondary battery of the present application, by ensuring that the ratio of the pore volume of the separator to the capacity per unit area of the negative electrode film layer satisfies the above range, the infiltration capability of the separator and the capacity of the negative electrode are ensured, which enables the corresponding battery to have a good cycling performance.

In some embodiments, C is the capacity per unit area of the negative electrode film layer, that is, the capacity per cm² of the negative electrode film layer (which can also be referred to as per cm² of the negative electrode plate).

In some embodiments, V is the pore volume per unit area of the separator, that is, the pore volume per cm² of the separator.

In some embodiments, V/C may be any value of 0.05 cm³/Ah, 0.07 cm³/Ah, 0.08 cm³/Ah, 0.09 cm³/Ah, 0.1 cm³/Ah, 0.15 cm³/Ah, 0.18 cm³/Ah, 0.20 cm³/Ah, 0.24 cm³/Ah, 0.25 cm³/Ah, 0.28 cm³/Ah and 0.3 cm³/Ah, or in a range composed of any two of the above values. Adjustments and selections can be made by those skilled in the art as required.

In some embodiments, C is 2-8 mAh, optionally 2.3-5.5 mAh, further optionally 2.3-5.0 mAh; and V is (2 - 20) × 10⁻⁴ cm³, optionally (2 - 15) × 10⁻⁴ cm³, further optionally (4 - 10) × 10⁻⁴ cm³.

In some embodiments, the pore volume per unit area of the separator is the pore volume of the separator under the autogenous pressure inside the battery; and the autogenous pressure inside the battery is generally 0-10 MPa.

In some embodiments, 0.07 cm³/Ah ≤ V/C ≤ 0.25 cm³/Ah, C is 2-8 mAh, and V is 2 × 10⁻⁴ - 20 × 10⁻⁴ cm³. Thus, the infiltration capability of the separator and the capacity of the negative electrode can be further ensured, which enables the corresponding battery to have a good cycling performance.

In some embodiments, 0.08 cm³/Ah ≤ V/C ≤ 0.2 cm³/Ah, C is 2-8 mAh, and V is 2.5 × 10⁻⁴ - 15 × 10⁻⁴ cm³. Thus, the infiltration capability of the separator and the capacity of the negative electrode can be further ensured, which enables the corresponding battery to have a good cycling performance.

In some embodiments, 0.08 cm³/Ah ≤ V/C ≤ 0.3 cm³/Ah, C is 2-8 mAh, and V is (2 - 20) × 10⁻⁴ cm³. Thus, the infiltration capability of the separator and the capacity of the negative electrode can be further ensured, which enables the corresponding battery to have a good cycling performance.

In some embodiments, 0.07 cm³/Ah ≤ V/C ≤ 0.25 cm³/Ah, C is 2-8 mAh, and V is 0.2 × 10⁻³ - 1.2 × 10⁻³ cm³. Thus, the infiltration capability of the separator and the capacity of the negative electrode can be further ensured, which enables the corresponding battery to have a good cycling performance.

In some embodiments, 0.05 cm³/Ah ≤ V/C ≤ 0.2 cm³/Ah, C is 2-8 mAh, and V is 0.16 × 10⁻³ - 1.0 × 10⁻³ cm3. Thus, the infiltration capability of the separator and the capacity of the negative electrode can be further ensured, which enables the corresponding battery to have a good cycling performance.

In some embodiments, 0.15 cm³/Ah ≤ V/C ≤ 0.25 cm³/Ah, C is 2.4-2.9 mAh, and V is 0.4 × 10⁻³ - 0.6 × 10⁻³ cm3.

In some embodiments, the negative electrode film layer has a surface density of 0.002-0.02 g/cm², optionally 0.006-0.015 g/cm², further optionally 0.005-0.007 g/cm². Thus, the infiltration capability of the separator and the capacity of the negative electrode can be further ensured, which enables the corresponding battery to have a good cycling performance.

In some embodiments, the negative electrode film layer comprises 80% - 99%, optionally 93% - 97% of a negative electrode active material, based on the weight of the negative electrode film layer. Thus, the infiltration capability of the separator and the capacity of the negative electrode can be further ensured, which enables the corresponding battery to have a good cycling performance.

In some embodiments, the negative electrode film layer has a thickness of 0.03-0.24 mm; optionally 0.08-0.16 mm. Thus, the infiltration capability of the separator and the capacity of the negative electrode can be further ensured, which enables the corresponding battery to have a good cycling performance.

In any embodiment, the separator comprises a base film and a coating layer provided on at least one side of the base film, wherein the coating layer comprises a first polymer particle and a second polymer particle. Thus, the infiltration capability of the separator and the capacity of the negative electrode can be further ensured, which enables the corresponding battery to have a good cycling performance.

In any embodiment, the number-average particle size of the first polymer particle is greater than that of the second polymer particle.

In some embodiments, the number-average particle size of the first polymer particle is 2-8 µm, optionally 3-7 µm; and/or, the number-average particle size of the second polymer particle is 50-800 nm, optionally 100-600 nm. Thus, the infiltration capability of the separator and the capacity of the negative electrode can be further ensured, which enables the corresponding battery to have a good cycling performance.

In some embodiments, the content of the first polymer particle is less than or equal to 15%, based on the weight of the coating layer; and/or, the content of the second polymer particle is less than or equal to 30%, based on the weight of the coating layer. Thus, the infiltration capability of the separator and the capacity of the negative electrode can be further ensured, which enables the corresponding battery to have a good cycling performance.

In some embodiments, the first polymer particle comprises at least one of a homopolymer or copolymer of a fluorine-containing olefine monomeric unit, a homopolymer or copolymer of an olefine monomeric unit, a homopolymer or copolymer of an unsaturated nitrile monomeric unit, a homopolymer or copolymer of an alkylene oxide monomeric unit, a homopolymer or copolymer of an acrylate monomeric unit, a homopolymer or copolymer of an imide monomeric unit, and modified compounds thereof; and/or, the second polymer particle comprises at least one of a homopolymer or copolymer of an unsaturated nitrile monomeric unit, a homopolymer or copolymer of a fluorine-containing olefine monomeric unit, a homopolymer or copolymer of a styrene-based monomeric unit, and modified compounds thereof. Thus, the infiltration capability of the separator and the capacity of the negative electrode can be further ensured, which enables the corresponding battery to have a good cycling performance.

In some embodiments, in the coating layer, the first polymer particle may comprise one or more of a homopolymer or copolymer of a fluorine-containing olefine monomeric unit, a homopolymer or copolymer of an olefine monomeric unit, a homopolymer or copolymer of an unsaturated nitrile monomeric unit, a homopolymer or copolymer of an alkylene oxide monomeric unit, a homopolymer or copolymer of an acrylate monomeric unit, a homopolymer or copolymer of an imide monomeric unit, and modified compounds thereof.

In some embodiments, the fluorine-containing olefine monomeric unit can be selected from one or more of difluoroethylene, vinylidene fluoride, trifluoroethylene, chlorotrifluoroethylene, tetrafluoroethylene, and hexafluoropropylene.

In some embodiments, the olefine monomeric unit can be selected from one or more of ethylene, propylene, butadiene, isoprene, etc.

In some embodiments, the unsaturated nitrile monomeric unit can be selected from one or more of acrylonitrile, methylacrylonitrile, etc.

In some embodiments, the alkylene oxide monomeric unit can be selected from one or more of ethylene oxide, propylene oxide, etc.

In some embodiments, the acrylate monomeric unit can be selected from one or more of methyl acrylate, ethyl acrylate, propyl acrylate, butyl acrylate, methyl methacrylate, butyl methacrylate, isooctyl methacrylate, etc.

In some embodiments, the first polymer particle may comprise one or more of polytetrafluoroethylene, polychlorotrifluoroethylene, polyvinyl fluoride, polyvinylidene fluoride, polyethylene, polypropylene, polyacrylonitrile, polyethylene oxide, polyacrylate, polymethacrylate, a copolymer of different fluorine-containing olefine monomeric units, a copolymer of a fluorine-containing olefine monomeric unit and an olefine monomeric unit, a copolymer of a fluorine-containing olefine monomeric unit and an acrylic monomeric unit, a copolymer of a fluorine-containing olefine monomeric unit and an acrylate monomeric unit, polyvinylpyrrolidone, polyimide, polyethylene oxide (PEO), and modified compounds thereof.

In some embodiments, the first polymer particle may comprise one or more of polyacrylonitrile (PAN), polymethyl methacrylate (PMMA), a vinylidene fluoride-trifluoroethylene copolymer, a vinylidene fluoride-hexafluoropropylene copolymer (PADF-HFP), a vinylidene fluoride-trifluoroethylene-hexafluoropropylene copolymer, a vinylidene fluoride-hexafluoropropylene-acrylic acid copolymer, a vinylidene fluoride-hexafluoropropylene-acrylate copolymer, polyvinylpyrrolidone, polyimide, polyethylene oxide (PEO), a styrene-vinyl acetate-pyrrolidone copolymer, and modified compounds of the copolymers above.

According to some embodiments, a modified compound of the homopolymers or copolymers refers to a modified compound obtained by copolymerization of the monomeric units in the homopolymer or copolymer with monomeric units containing a specific functional group. For example, a fluorine-containing olefine monomeric unit can be copolymerized with a carboxyl functional group-containing compound to obtain a modified compound thereof, etc.

In some embodiments, the first polymer particle has a number-average molecular weight of 10,000 - 100,000, which is measured by means of vapor phase osmometry.

In some embodiments, the content of the first polymer particle in the coating layer is 0% - 15%, optionally 2% - 15%, optionally 5% - 10%, based on the weight of the coating layer. Thus, the infiltration capability of the separator and the capacity of the negative electrode can be further ensured, which enables the corresponding battery to have a good cycling performance.

In some embodiments, the coating layer comprises 0% - 30%, optionally 10% - 25%, further optionally 15% - 20% of the second polymer particle, based on the weight of the coating layer. Thus, the infiltration capability of the separator and the capacity of the negative electrode can be further ensured, which enables the corresponding battery to have a good cycling performance.

In some embodiments, the second polymer particle mainly serves a binding function and may comprise one or more of a homopolymer or copolymer of an unsaturated nitrile monomeric unit, a homopolymer or copolymer of a fluorine-containing olefine monomeric unit, a homopolymer or copolymer of a styrene-based monomeric unit, and modified compounds thereof.

In some embodiments, the second polymer particle may be one or more of polyacrylonitrile (PAN), polyvinylidene fluoride (PVDF) and polystyrene (PS).

In some embodiments, the second polymer particle has a number-average molecular weight of 300,000 - 800,000, which is measured by means of vapor phase osmometry.

In some embodiments, the coating layer further comprises an inorganic particle; and optionally, the inorganic particle has a volume-average particle size of 0.1-2 µm. Thus, the infiltration capability of the separator and the capacity of the negative electrode can be further ensured, which enables the corresponding battery to have a good cycling performance.

In some embodiments, the inorganic particle has a volume-average particle size D_{V50} of 0.1-2 µm, optionally 0.3-0.7 µm. Thus, the infiltration capability of the separator and the capacity of the negative electrode can be further ensured, which enables the corresponding battery to have a good cycling performance.

In the present application, the volume-average particle size Dᵥ₅₀ of the inorganic particle has a meaning well-known in the art, and can be determined by an instrument and method known in the art. For example, the volume-average particle size can be determined by using a laser particle size analyzer (e.g., Master Size 3000) with reference to GB/T 19077-2016 Particle size analysis - Laser diffraction methods.

In the present application, the particle size and number-average particle size of the organic particle can be determined by a device and method known in the art. For example, the scanning electron microscope (SEM) image of the separator is obtained by using a scanning electron microscope (e.g., ZEISS Sigma 300) with reference to JY/T010-1996. As an example, the measurement can be carried out as follows: a test sample with length × width = 50 mm × 100 mm is randomly selected from the separator and a plurality of (e.g., 5) test areas are randomly selected on the test sample; and at a certain magnification (for example, at 500 x when measuring the first organic particle and at 1000 x when measuring the second organic particle), the particle size (i.e., the distance between two points that are farthest apart on an organic particle is taken as the particle size of the organic particle) of each organic particle in the respective test area is read. The numbers and particle size values of the organic particles in the respective test areas are recorded, and the arithmetic mean of the particle sizes of the organic particles in the test areas are taken as the number-average particle size of the organic particles in the test sample. In order to ensure the accuracy of the test results, the above measurement can be repeated using a plurality of (for example, 10) test samples, and an average of these test samples is taken as the final measurement result.

In some embodiments, the inorganic particle may comprise one or more of aluminum oxide (Al₂O₃), boehmite (γ-AlOOH), barium titanate (BaTiO₃), titanium oxide (TiO₂), magnesium oxide (MgO), barium sulfate (BaSO₄), magnesium hydroxide (Mg(OH)₂), silicon dioxide (SiO₂), tin dioxide (SnO₂), calcium oxide (CaO), zinc oxide (ZnO), zirconium oxide (ZrO₂), yttrium oxide (Y₂O₃), nickel oxide (NiO), cerium oxide (CeO₂), zirconium titanate (SrTiO₃), magnesium fluoride (MgF₂), clay, a glass powder, boron nitride and aluminum nitride; and for example, the inorganic particle may comprise one or more of aluminum oxide, boehmite, barium titanate, titanium oxide, magnesium oxide, clay, a glass powder, boron nitride and aluminum nitride. Optionally, the inorganic particle comprises one or more of aluminum oxide (Al2O3) and boehmite (γ-AlOOH).

In some embodiments, the content of the inorganic particle in the coating layer is 60% - 100%, based on the weight of the coating layer.

In an embodiment, the coating layer comprises 65% - 80% of the inorganic particle, 6% - 12% of the first polymer particle, and 15% - 20% of the second polymer particle, based on the weight of the coating layer.

In some embodiments, the coating layer may further comprise other organic compounds, for example, a polymer that improves the heat resistance, a dispersant, a wetting agent, other types of binders, etc. The above other organic compounds are all non-granular substances in the coating layer. In the present application, the above other organic compounds are not particularly limited in types, and can be selected from any well-known materials providing well improved performance.

In the present application, the material of the base film is not particularly limited, and can be selected from any well-known base film with good chemical and mechanical stability, for example one or more of glass fibers, a non-woven fabric, polyethylene, polypropylene, and polyvinylidene fluoride. The base film may be either a single-layer film or a multi-layer composite film. When the base film is a multi-layer composite film, the materials of the respective layers may be the same or different.

In some embodiments, the base film has a thickness of 5-16 µm, and the coating layer on one side thereof has a thickness of 1-10 µm, optionally 2-5 µm, which are measured by using a scanning electron microscope. Thus, the infiltration capability of the separator and the capacity of the negative electrode can be further ensured, which enables the corresponding battery to have a good cycling performance.

In the present application, the thickness of the coating layer is the vertical distance from the top of a protrusion formed by the first polymer particle to the horizontal line of the surface of the base film.

In some embodiments, the ratio of the thickness of the coating layer on one side to the thickness of the base film is 0.1-1.5, optionally 0.25-1.0, further optionally 0.4-0.85. Thus, the infiltration capability of the separator and the capacity of the negative electrode can be further ensured, which enables the corresponding battery to have a good cycling performance.

In some embodiments, the separator has an air permeability (Gurley value) of less than or equal to 370 s, optionally 100-250 s, further optionally 150-200 s, which is measured at 100 mL gas penetration according to ASTM-D726 (B). Thus, the infiltration capability of the separator and the capacity of the negative electrode can be further ensured, which enables the corresponding battery to have a good cycling performance.

In some embodiments, the coating layer has a porosity of 20% - 98%, optionally 25% - 40%, further optionally 28% - 35%. Thus, the infiltration capability of the separator and the capacity of the negative electrode can be further ensured, which enables the corresponding battery to have a good cycling performance.

In some embodiments, the separator has a porosity of 20% - 60%, optionally 30% - 40%, which is determined according to ASTM D-2873. Thus, the infiltration capability of the separator and the capacity of the negative electrode can be further ensured, which enables the corresponding battery to have a good cycling performance.

The secondary battery and the power consuming device of the present application will be described below with reference to the drawings as appropriate.

In an embodiment of the present application, a secondary battery is provided.

Generally, a secondary battery comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is provided between the positive electrode plate and the negative electrode plate and mainly functions to prevent the positive and negative electrodes from short-circuiting while enabling ions to pass through.

### Positive electrode plate

The positive electrode plate comprises a positive electrode current collector and a positive electrode film layer provided on at least one surface of the positive electrode current collector, the positive electrode film layer comprising a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector may be formed by forming a metal material on the polymer material substrate. Herein, the metal material includes, but is not limited to, aluminum, an aluminum alloy, nickel, a nickel alloy, titanium, a titanium alloy, silver and a silver alloy. The polymer material substrate (a substrate such as polypropylene (PP), polyethylene terephthalate (PET), polybutylene terephthalate (PBT), polystyrene (PS), polyethylene (PE), etc.)

In some embodiments, the positive electrode active material may be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or as a combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.3}Co_{0.25}Mn_{0.25}O₂ (also referred to as NCM₂₁₁), LiNi_{0.6}Co_{0.2}Mn_{0.2}O₂ (also referred to as NCM₆₂₂), and LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20% by weight, based on the total weight of the positive electrode film layer.

In some embodiments, the positive electrode film layer also optionally comprises a conductive agent. As an example, the conductive agent may include at least one of superconducting carbon, carbon black (e.g., acetylene black or Ketjen black), carbon dots, carbon nanotubes, graphene, and carbon nanofibers. The weight percentage of the conductive agent in the positive electrode film layer is 0-20% by weight, based on the total weight of the positive electrode film layer.

In some embodiments, the positive electrode plate can be prepared by the above-mentioned components for preparing the positive electrode plate, such as a positive electrode active material, a conductive agent, a binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5000-25000 mPa·s; and the positive electrode slurry is coated onto the surface of the positive electrode current collector, dried and then cold pressed by means of a cold-rolling mill to form a positive electrode plate, wherein the positive electrode plate has a compacted density of 2.0-3.6 g/cm³, optionally 2.3-3.5 g/cm³.

### Negative electrode plate

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector may be formed by forming a metal material on the polymer material substrate. Herein, the metal material includes but is not limited to copper, a copper alloy, nickel, a nickel alloy, titanium, a titanium alloy, silver and a silver alloy, and the polymer material substrate includes but is not limited to polypropylene (PP), polyethylene terephthalate (PET), polybutylene terephthalate (PBT), polystyrene (PS), polyethylene (PE) and other substrates.

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more. The weight percentage of the negative electrode active material in the negative electrode film layer is 70-100 wt%, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight percentage of the binder in the negative electrode film layer is 0-30% by weight, based on the total weight of the negative electrode film layer.

In some embodiments, the negative electrode film layer may optionally comprise a conductive agent. The conductive agent may be at least one selected from superconducting carbon, carbon black (e.g., acetylene black or Ketjen black), carbon dots, carbon nanotubes, graphene, and carbon nanofibers. The weight percentage of the conductive agent in the negative electrode film layer is 0-20% by weight, based on the total weight of the negative electrode film layer.

In some embodiments, the negative electrode film layer may optionally comprise other auxiliary agents, such as thickeners (e.g., sodium carboxymethyl cellulose (CMC-Na)), etc. The weight percentage of the other auxiliary agents in the negative electrode film layer is 0-15% by weight, based on the total weight of the negative electrode film layer.

In some embodiments, the negative electrode plate can be prepared by the above-mentioned components for preparing the negative electrode plate, such as a negative electrode active material, a conductive agent, a binder and any other components, are dispersed in a solvent (e.g., deionized water) to form a negative electrode slurry, wherein the negative electrode slurry has a solid content of 30-70 wt%, and the viscosity at room temperature thereof is adjusted to 2000-10000 mPa·s; and the resulting negative electrode slurry is coated onto a negative electrode current collector, followed by a drying procedure and cold pressing (e.g., double rollers), so as to obtain the negative electrode plate. The negative electrode plate has a compacted density of 0.5-2.0 g/m³.

The mass M of the negative electrode active material per unit area of the negative electrode film layer can be obtained by weighing same with a standard balance.

The thickness T of the negative electrode film layer can be measured by using a tenthousandth micrometer caliper, for example, a tenthousandth micrometer caliper model Mitutoyo 293-100 with a precision of 0.1 µm. It should be noted that the thickness of the negative electrode film layer mentioned in the present invention refers to the thickness of the negative electrode film layer of the negative electrode plate that has been compacted by means of cold pressing and used to assemble a battery.

### Electrolyte

The electrolyte functions to conduct ions between the positive electrode plate and the negative electrode plate. The type of the electrolyte is not specifically limited in the present application and can be selected as necessary. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP). The concentration of the electrolyte salt is typically 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### Separator

In some embodiments, the secondary battery further comprises a separator of the first aspect of the present application.

In some embodiments, the separator has a thickness of 5-40 µm, optionally 7-20 µm.

In some embodiments, the positive electrode plate, the negative electrode plate, and the separator may be formed into an electrode assembly by means of a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

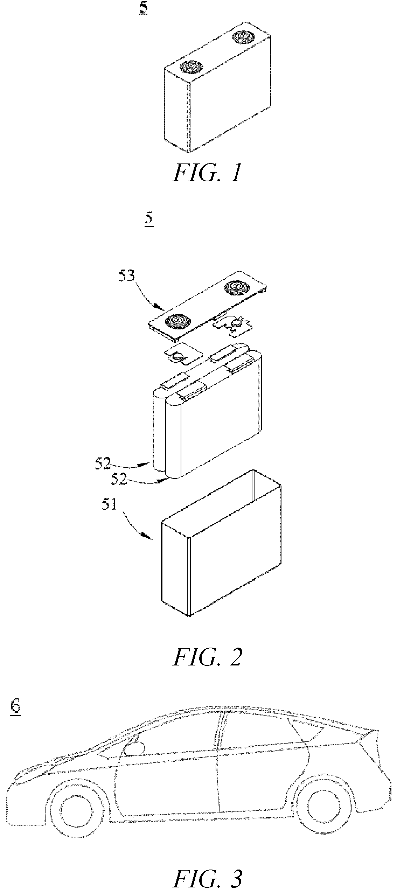

The shape of the secondary battery is not particularly limited in the present application and may be cylindrical, square or any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be formed into an electrode assembly 52 by means of a winding process or a stacking process. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

In the battery module, a plurality of secondary batteries 5 may be arranged sequentially along a length direction of the battery module. Apparently, the secondary batteries may also be arranged in any other manner. Furthermore, the plurality of secondary batteries 5 may be fixed by fasteners.

Optionally, the battery module may further comprise an outer shell with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

The battery pack may include a battery box and a plurality of battery modules provided in the battery box. The battery box comprises an upper box body and a lower box body, wherein the upper box body may cover the lower box body to form a closed space for accommodating the battery modules. A plurality of battery modules may be arranged in the battery box in any manner.

In addition, the present application further provides a power consuming device comprising at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 3 shows an example of a power consuming device. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

### Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product instructions. The reagents or instruments used therein on which no manufacturers are specified are all commercially available conventional products.

### I. Examples

### Example 1

### 1) Preparation of positive electrode plate

A positive electrode active material of NCM811, conductive carbon black SP, and a binder of PVDF at a weight ratio of 98 : 1 : 1 were dispersed into a solvent of NMP and mixed until uniform to obtain a positive electrode slurry with a solid content of 75%; and the positive electrode slurry was uniformly coated onto a positive electrode current collector, i.e., an aluminum foil, followed by drying and cold pressing to obtain a positive electrode plate, wherein the coating amount per unit area of the positive electrode plate was 0.39 g/1540.25 mm².

### 2) Preparation of negative electrode plate

A negative electrode active material (graphite and silicon monoxide SiO), a thickener of sodium carboxymethyl cellulose, a binder of styrene butadiene rubber, and a conductive agent of acetylene black at a mass ratio of 96.5 : 1 : 1 : 1 were mixed, and deionized water was added to obtain a negative electrode slurry with a solid content of 55% under the action of a vacuum stirrer, wherein the content of silicon monoxide SiO in the negative electrode active material is 5% by weight; the negative electrode slurry was uniformly coated onto a copper foil; and the copper foil was air dried at room temperature and then transferred to an oven for drying at 120°C for 1 h, followed by cold pressing and slitting to obtain a negative electrode plate, wherein the coating amount per unit area of the negative electrode plate was 0.2 g/1540.25 mm², and the thickness of the negative electrode film layer was 0.158 mm.

### 3) Preparation of separator

(1) a PE substrate having a thickness of 7 µm and a porosity of 37% was provided;
(2) a coating layer slurry was prepared as follows: an inorganic particle of aluminum oxide (Al₂O₃, with a Dv50 of 500 nm), a dispersant of sodium carboxymethyl cellulose (CMC-Na) and a wetting agent of an organosilicon modified polyether at a weight ratio of 98 : 1 : 1 were mixed in deionized water until uniform to obtain a coating layer slurry with a solid content of 38% (by weight); and
(3) the coating layer slurry prepared in step (2) was coated onto one surface of the PE substrate using a coating machine, followed by procedures such as drying and slitting to obtain a separator, wherein the gravure roller of the coating machine had a number of lines of 125 LPI; the coating was carried out at a speed of 50 m/min and a line speed ratio of 1.15; and the drying was carried out at a temperature of 50°C for 25 s. The single-sided coating layer weight per unit area of the separator was 2.3 g/m².

### 4) Preparation of electrolyte solution

An organic solvent was a mixed solution comprising ethylene carbonate (EC), ethyl methyl carbonate (EMC), and diethyl carbonate (DEC), with the volume ratio of EC, EMC, and DEC being 20 : 20 : 60. In an argon atmosphere glove box with a water content of < 10 ppm, a fully dried lithium salt of LiPF6 was dissolved into the organic solvent and mixed until uniform to obtain an electrolyte solution, wherein the concentration of the lithium salt was 1 mol/L.

### 5) Preparation of battery

The positive electrode plate, the separator, and the negative electrode plate were stacked in sequence, with the separator being located between the positive electrode plate and the negative electrode plate to function for isolation, and then wound to form a square bare cell; the square bare cell was put into an aluminum plastic film and then baked at 80°C for water removal; and 63 g of a corresponding non-aqueous electrolyte solution was injected and the aluminum plastic film was sealed, followed by procedures such as standing, hot and cold pressing, forming, clamping and capacity grading to obtain a finished battery with a capacity of 35 Ah.

### Examples 2-8

The preparation steps of example 1 were repeated, except that the thickness of the base film of the separator, the surface density of the negative electrode, and the thickness of the coating layer of the separator were individually varied, as detailed in Table 1.

### Example 9

The preparation steps of example 3 were repeated, except that in step (2) of part 3) Preparation of separator, an inorganic particle of aluminum oxide (Al₂O₃, with a Dv50 of 500 nm), a first polymer particle of a styrene-vinyl acetate-pyrrolidone copolymer (with a number-average molecular weight of 80,000), a dispersant of sodium carboxymethyl cellulose (CMC-Na), and a wetting agent of an organosilicon modified polyether at a weight ratio of 90 : 8 : 1 : 1 were used.

### Example 10

The preparation steps of example 3 were repeated, except that in step (2) of part 3) Preparation of separator, an inorganic particle of aluminum oxide (Al₂O₃, with a Dv50 of 500 nm), a first polymer particle of a styrene-vinyl acetate-pyrrolidone copolymer (with a number-average molecular weight of 80,000), a second polymer particle of polyvinylidene fluoride (with a number-average molecular weight of 500,000), a dispersant of sodium carboxymethyl cellulose (CMC-Na), and a wetting agent of an organosilicon modified polyether at a weight ratio of 75 : 8 : 15 : 1 : 1 were used.

### Example 11

The preparation steps of example 3 were repeated, except that in step (2) of part 3) Preparation of separator, an inorganic particle of aluminum oxide (Al₂O₃, with a Dv50 of 500 nm), a first polymer particle of a styrene-vinyl acetate-pyrrolidone copolymer (with a number-average molecular weight of 80,000), a second polymer particle of polyvinylidene fluoride (with a number-average molecular weight of 500,000), a dispersant of sodium carboxymethyl cellulose (CMC-Na), and a wetting agent of an organosilicon modified polyether at a weight ratio of 68 : 10 : 20 : 1 : 1 were used.

### Example 12

The preparation steps of example 3 were repeated, except that in step (2) of part 3) Preparation of separator, an inorganic particle of aluminum oxide (Al₂O₃, with a Dv50 of 500 nm), a second polymer particle of polyvinylidene fluoride (with a number-average molecular weight of 500,000), a dispersant of sodium carboxymethyl cellulose (CMC-Na), and a wetting agent of an organosilicon modified polyether at a weight ratio of 78 : 20 : 1: 1 were used.

### Comparative example 1: the V/C value was beyond the scope of protection of the present invention

The preparation steps of example 1 were repeated, except that in part 1), the coating amount per unit area of the positive electrode plate was 0.164 g/1540.25 mm2; in part 2), the coating amount per unit area of the negative electrode plate was 0.084 g/1540.25 mm2; and in part 3) Preparation of separator, a separator having a thickness of 12 µm was used in step (1), and the single-sided coating layer weight per unit area of the separator in step (3) was 8 g/m².

### Comparative Example 2

The preparation steps of example 10 were repeated, except that in part 1), the coating amount per unit area of the positive electrode plate was 0.57 g/1540.25 mm²; in part 2), the coating amount per unit area of the negative electrode plate was 0.29 g/1540.25 mm²; and in part 3) Preparation of separator, a separator having a thickness of 5 µm was used in step (1), and an inorganic particle of aluminum oxide (Al₂O₃, with a Dv50 of 500 nm), a first polymer particle of a styrene-vinyl acetate-pyrrolidone copolymer (with a number-average molecular weight of 80,000), a second polymer particle of polyvinylidene fluoride (with a number-average molecular weight of 500,000), a dispersant of sodium carboxymethyl cellulose (CMC-Na), and a wetting agent of an organosilicon modified polyether at a weight ratio of 94 : 2 : 2 : 1 : 1 were used in step (2).

The parameters of products of examples and comparative examples were summarized in Table 1.

**Table 1 Parameters of products of examples and comparative examples**

| No. | Negative electrode | | | | Separator | | | | | | | V/ C |
|---|---|---|---|---|---|---|---|---|---|---|---|---|
| | Type of negative electrode active material | Cont ent of negat ive electr ode activ e mate rial | Surfa ce densi ty (g/c m2) | Capa city C per cm2 of electr ode plate (mA h) | Thi ckn ess of bas e fil m (m m) | Thic knes s of singl e-sided coati ng layer (mm ) | Pro por tion of first org ani c part icle | Pro por tion of sec ond org ani c part icle | pore volum eV | Por osit y | Air per me abil ity of sep arat or | cm ³/A h |
| 1 | Graphite + 5% SiO | 96.5 % | 0.01 3 | 5.21 | 0.0 05 | 0.00 2 | 0% | 0% | 0.0003 | 34 % | 100 | 0.0 58 |
| 2 | Graphite + 5% SiO | 96.5 % | 0.01 3 | 5.21 | 0.0 07 | 0.00 2 | 0% | 0% | 0.0004 | 34 % | 120 | 0.0 77 |
| 3 | Graphite + 5% SiO | 96.5 % | 0.01 2 | 4.79 | 0.0 07 | 0.00 2 | 0% | 0% | 0.0004 | 34 % | 120 | 0.0 84 |
| 4 | Graphite + 5% SiO | 96.5 % | 0.01 1 | 4.43 | 0.0 07 | 0.00 3 | 0% | 0% | 0.0004 | 34 % | 120 | 0.0 90 |
| 5 | Graphite + 5% SiO | 96.5 % | 0.00 7 | 2.86 | 0.0 07 | 0.00 3 | 0% | 0% | 0.0004 | 34 % | 180 | 0.1 40 |
| 6 | Graphite + 5% SiO | 96.5 % | 0.00 6 | 2.60 | 0.0 06 | 0.00 5 | 0% | 0% | 0.0005 | 33 % | 200 | 0.1 92 |
| 7 | Graphite + 5% SiO | 96.5 % | 0.00 6 | 2.47 | 0.0 09 | 0.00 5 | 0% | 0% | 0.0006 | 33 % | 200 | 0.2 43 |
| 8 | Graphite + 5% SiO | 96.5 % | 0.00 6 | 2.34 | 0.0 11 | 0.00 5 | 0% | 0% | 0.0007 | 34 % | 250 | 0.2 99 |
| 9 | Graphite + 5% SiO | 96.5 % | 0.01 2 | 4.79 | 0.0 07 | 0.00 5 | 8% | 0% | 0.0010 | 59 % | 130 | 0.2 09 |
| 10 | Graphite + 5% SiO | 96.5 % | 0.01 2 | 4.79 | 0.0 07 | 0.00 5 | 8% | 15 % | 0.0011 | 65 % | 120 | 0.2 30 |
| 11 | Graphite + 5% SiO | 96.5 % | 0.01 2 | 4.79 | 0.0 07 | 0.00 5 | 10 % | 20 % | 0.0012 | 71 % | 110 | 0.2 51 |
| 12 | Graphite + 5% SiO | 96.5 % | 0.01 2 | 4.79 | 0.0 07 | 0.00 5 | 0% | 20 % | 0.0008 | 45 % | 180 | 0.1 67 |
| Co mp arat ive exa mpl e 1 | Graphite + 5% SiO | 96.5 % | 0.00 55 | 2.19 | 0.0 12 | 0.00 7 | 0% | 0% | 0.0009 | 33 % | 270 | 0.4 11 |
| Co mp arat ive exa mpl e 2 | Graphite + 5% SiO | 96.5 % | 0.01 9 | 7.55 | 0.0 05 | 0.00 2 | 2% | 2% | 0.0003 | 34 % | 100 | 0.0 40 |

### II. Performance tests

### 1. Test for cycling performance

A battery was placed into an oven at 25°C, allowed to stand for 2 h, and then subjected to a charge/discharge test. The battery was charged at a constant current of 0.5 C to 4.25 V and continuously charged at the constant voltage until the charging current was less than 0.05 C; the process was suspended for 30 min; the battery was discharged at a constant current of 0.5 C to 2.5 V; and the process was suspended for 30 min, and the corresponding discharge capacity was recorded as the initial discharge capacity. One charge/discharge cycle of the battery was as described above and the charge/discharge cycle was repeated continuously until the battery capacity decayed to 80% of the initial value, and the number of cycles was recorded.

### 2. Test method for capacity C per unit area of negative electrode film layer

A cell was fully discharged and disassembled in a dry environment under vacuum to take out the negative electrode plate; the electrode plate was then soaked with excess DMC for 2 h or more, taken out, dried in a vacuum drying oven at 60°C or more and punched in a dry environment into a disc with a diameter of 1.4 cm (with an area of 1.5386 cm2); in a glove box, a lithium metal plate was used as a counter electrode, a ceglard composite film was selected as a separator, and an electrolyte solution was added to form a button battery; and the button battery was subjected to a charge/discharge test using a LAND series battery test instrument to obtain the capacity C of the prepared disc.

### 3. Test method for pore volume V per unit area of separator

The separator to be tested was cut into a square sample with a certain length and width. The apparent volume V1 of the sample was measured and calculated as V1 = S × d (where S was the area of an electrode plate and can be calculated as length × width, in cm²; and d was the thickness of the separator and can be measured directly, in cm). In combination with Archimedes principle and Boyle's Law (PV = nRT), the true volume V2 (in cm³) of the material being tested was accurately measured by means of a helium displacement method using an AccuPyc II1340 true density meter with reference to the porosity test method in GB/T 24586-2009, and the pore volume V = V1 - V2.

### III. Test results of examples and comparative examples

The batteries of the examples and comparative examples were respectively prepared according to the method described above and various performance parameters thereof were measured. The results were shown in Table 2 below.

**Table 2 Performance of batteries of examples and comparative examples**

| No. | Number of fast-charing cycles | Initial discharge capacity |
|---|---|---|
| 1 | 500 cycles | 35 Ah |
| 2 | 600 cycles | 34.5 Ah |
| 3 | 700 cycles | 34.2 Ah |
| 4 | 800 cycles | 33.5 Ah |
| 5 | 1100 cycles | 31 Ah |
| 6 | 1300 cycles | 29.5 Ah |
| 7 | 1400 cycles | 28 Ah |
| 8 | 1500 cycles | 27 Ah |
| 9 | 1200 cycles | 32 Ah |
| 10 | 1400 cycles | 32.3 Ah |
| 11 | 1500 cycles | 33 Ah |
| 12 | 1200 cycles | 33 Ah |
| Comparativ e example 1 | 1500 cycles | 26 Ah |
| Comparativ e example 2 | 200 cycles | 35.5 Ah |

As can be learned from the above examples and comparative examples, the secondary battery of the present application has a good cycling performance and the initial discharge capacity thereof is maintained at a relatively high level.

It should be noted that the present application is not limited to the above embodiments. The above embodiments are exemplary only, and any embodiment that has substantially the same constitutions as the technical ideas and has the same effects within the scope of the technical solution of the present application is encompassed within the technical scope of the present application. In addition, without departing from the scope of the subject matter of the present application, various modifications that are made to the embodiments and are conceivable to those skilled in the art, and other modes constructed by combining some of the constituent elements of the embodiments are also encompassed within the scope of the present application.

## Claims

1. A secondary battery, comprising a negative electrode plate and a separator, wherein the negative electrode plate comprises a negative electrode current collector and a negative electrode film layer provided on at least one side of the negative electrode current collector; and
with the capacity per unit area of the negative electrode film layer being denoted as C, and the pore volume per unit area of the separator being denoted as V, the secondary battery satisfies: 0.05 cm³/Ah ≤ V/C ≤ 0.3 cm³/Ah, where C is in mAh, and V is in cm³.

2. The secondary battery according to claim 1, **characterized in that** 0.07 cm³/Ah ≤ V/C ≤ 0.25 cm³/Ah; and optionally, 0.08 cm³/Ah ≤ V/C ≤ 0.2 cm³/Ah.

3. The secondary battery according to claim 1 or 2, **characterized in that** C is 2-8 mAh, optionally 2.3-5.5 mAh, further optionally 2.3-5.0 mAh.

4. The secondary battery according to any one of claims 1-3, **characterized in that** V is 2 × 10⁻⁴ - 20 × 10⁻⁴ cm³, optionally 2 × 10⁻⁴ - 15 × 10⁻⁴ cm³, further optionally 4 × 10⁻⁴ - 10 × 10⁻⁴ cm³.

5. The secondary battery according to any one of claims 1-4, **characterized in that** the negative electrode film layer has a surface density of 0.002 g/cm² - 0.02 g/cm², optionally 0.006-0.015 g/cm², further optionally 0.005-0.007 g/cm².

6. The secondary battery according to any one of claims 1-5, **characterized in that** the negative electrode film layer has a thickness of 0.03-0.24 mm; optionally 0.08-0.16 mm.

7. The secondary battery according to any one of claims 1-6, **characterized in that** the separator comprises a base film and a coating layer provided on at least one side of the base film, wherein the coating layer comprises a first polymer particle and a second polymer particle.

8. The secondary battery according to claim 7, **characterized in that** the number-average particle size of the first polymer particle is greater than that of the second polymer particle.

9. The secondary battery according to claim 7 or 8, **characterized in that** the number-average particle size of the first polymer particle is 2-8 µm, optionally 3-7 µm; and/or, the number-average particle size of the second polymer particle is 50-800 nm, optionally 100-600 nm.

10. The secondary battery according to any one of claims 7-9, **characterized in that** the content of the first polymer particle is less than or equal to 15%, based on the weight of the coating layer; and/or, the content of the second polymer particle is less than or equal to 30%, based on the weight of the coating layer.

11. The secondary battery according to any one of claims 7-10, **characterized in that** the first polymer particle comprises at least one of a homopolymer or copolymer of a fluorine-containing olefine monomeric unit, a homopolymer or copolymer of an olefine monomeric unit, a homopolymer or copolymer of an unsaturated nitrile monomeric unit, a homopolymer or copolymer of an alkylene oxide monomeric unit, a homopolymer or copolymer of an acrylate monomeric unit, a homopolymer or copolymer of an imide monomeric unit, and modified compounds thereof; and/or, the second polymer particle comprises at least one of a homopolymer or copolymer of an unsaturated nitrile monomeric unit, a homopolymer or copolymer of a fluorine-containing olefine monomeric unit, a homopolymer or copolymer of a styrene-based monomeric unit, and modified compounds thereof.

12. The secondary battery according to any one of claims 7-11, **characterized in that** the coating layer further comprises an inorganic particle; and optionally, the inorganic particle has a volume-average particle size of 0.1-2 µm.

13. The secondary battery according to any one of claims 7-12, **characterized in that** the base film has a thickness of 5-16 µm; and/or, the coating layer has a thickness of 1-5 µm.

14. The secondary battery according to any one of claims 7-13, **characterized in that** the ratio of the thickness of the coating layer on one side to the thickness of the base film is 0.1-1.5.

15. The secondary battery according to any one of claims 1-14, **characterized in that** the separator has an air permeability of less than or equal to 370 s; optionally 100-250 s.

16. The secondary battery according to any one of claims 1-15, **characterized in that** the separator has a porosity of 20% - 60%.

17. A power consuming device, comprising a secondary battery according to any one of claims 1-16.
